# EUROPÄISCHE PATENTSCHRIFT

(11) **EP 2 803 496 B1**
(45) Veröffentlichungstag und Bekanntmachung des Hinweises auf die Patenterteilung: **29.07.2015**
(21) Anmeldenummer: 14165919.3
(22) Anmeldetag: 25.04.2014
(51) Int. Cl.: B42C 19/08, B42C 7/00, B65G 47/252, B65H 29/20, B65H 29/70, B65H 31/34, B65H 31/30

(54) **Anleger für einen Klebebinder**
Feeder for an adhesive binding machine
Margeur pour une reliure par collage

(30) Priorität: 17.05.2013 DE 102013008533
(43) Veröffentlichungstag der Anmeldung: 19.11.2014
(73) Patentinhaber: Müller Martini Holding AG, 6052 Hergiswil (CH)
(72) Erfinder: Friese, Thomas, 04177 Leipzig (DE); Sommerer, Frank, 04288 Leipzig (DE)

(56) Entgegenhaltungen:
- EP-A1- 1 645 434
- EP-A2- 1 500 520
- EP-A2- 2 292 444
- EP-A2- 2 631 083

## Beschreibung

Die Erfindung betrifft einen Anleger für einen Klebebinder mit den oberbegrifflichen Merkmalen von Anspruch 1 und einen solchen Klebebinder mit den Merkmalen von Anspruch 10.

### Stand der Technik

Klebebinder, dienen der Herstellung von klebegebundenen Broschuren oder Buchblocks für Festeinbände, wobei die zu einem Buchblock zusammengetragenen Falzbogen und / oder Einzelblätter durch Auftragen eines Klebstoffs bzw. Leims auf den zuvor bearbeiteten Blockrücken verbunden werden. Die Begriffe Leim und Klebstoff werden nachfolgend synonym verwendet. Die möglichen Bindeverfahren und die Produktvarianten sind von der Maschinenausrüstung abhängig. Diese besteht im Wesentlichen aus den Funktionseinheiten Buchblocktransportsystem, Buchblockeinführstation, Rückenbearbeitung, Rückenbeleimen, Zwischentrocknung, Seitenbeleimen, Rückenverstärkung, Umschlag anlegen, Umschlag andrücken, Buchblockausfuhr und trocknen.

Die DE 20 2005 007 012 U1 als auch die US 8 132 995 B2 zeigen eine derartige Buchbindemaschine mit einem Buchblocktransportsystem. Das Buchblocktransportsystem besteht aus um Umlenkräder laufenden Fördermitteln und einer Vielzahl von in einem gleichen in gegenseitigen Abstand zueinander daran befestigten Klammern zum Einspannen von Blattstapeln.

Neben Klebebindern mit Zusammentragmaschine und somit automatischer Beschickung sind auch u.a. kleinere Klebebinder mit Start-Stopp-Betrieb bekannt, welche eine Handanlage besitzen. Dabei wird ein jeweiliger Buchblock vom Maschinenbediener in einer Buchblockeinführstation in eine stillstehende Transportklammer gegeben. Die Transportklammer bewegt den Buchblock dann entlang verschiedener Bearbeitungsstationen durch den Klebebinder. Ein derartiger Klebebinder wird von der Anmelderin zum Anmeldezeitpunkt unter dem Namen Eurobind EB 1300 vertrieben und wird als Vier-Zangen-Binder bezeichnet. Dieser besitzt vier Transportklammern, welche von einer Antriebskette bewegt werden.

Nachteilig an diesen kleinen Klebebindern ist, dass durch die vorgegebenen Stoppzeiten, welche für das Einführen eines Buchblocks erforderlich sind, die Leistung des Klebebinders stark begrenzt wird. Während der Stillstandszeit, zu welcher einer der Transportklammern ein Buchblock zugeführt wird, stehen auch die drei anderen Klammern still. Weiter nachteilig ist die hohe körperliche Belastung des Maschinenbedieners beim Ergreifen, Aufstoßen und Einführen der Buchblocks.

Eine bekannte Lösung für dieses Problem ist der Einsatz einer Roboterzelle mit Roboterarm, welcher die Buchblocks ergreift und in einen Klebebinder vom Typ Horizon BQ-470 einführt. Diese Lösung ist jedoch sehr kostenintensiv und erfordert zusätzliche Stellfläche, sodass sie nur in wenigen Fällen wirtschaftlich bzw. möglich ist.

### Aufgabenstellung

Aufgabe der vorliegenden Erfindung ist es daher, einen kostengünstigen Anleger für einen Klebinder zu schaffen, welcher einen geringen Stellflächenbedarf bei gleichzeitig sicherer und leistungsfähiger Buchblockzuführung aufweist.

Gelöst wird diese Aufgabe durch einen Anleger mit den Merkmalen von Anspruch 1.

Der erfindungsgemäße Anleger dient dem Zuführen von Buchblocks an einen Klebebinder. Dazu weist der Anleger eine im Wesentlichen horizontale Zuführstrecke auf, welche insbesondere von einem Rollenförderer gebildet wird, um Buchblocks in einer Transportrichtung zu bewegen. Am Ende der Zuführstrecke ist mindestens ein absenkbarer oder wegschwenkbarer, jedenfalls entfernbarer, Frontanschlag angebracht zum Abbremsen eines jeweiligen Buchblocks. Ebenfalls an diesem Ende der Zuführstrecke befinden sich zwei Greifer zum Ergreifen eines jeweiligen Buchblocks und Halten des Buchblocks während dem Einführen in eine Buchblockklammer des Klebebinders, wobei ein jeweiliger Greifer insbesondere zwei Klemmbacken aufweist. Erfindungsgemäß weisen die Greifer eine Drehachse und einen Drehantrieb auf zum Schwenken eines jeweiligen Buchblocks von seiner im Wesentlichen horizontalen Lage auf der Zuführstrecke in eine im Wesentlichen vertikale Lage zur Übergabe in eine Buchblockklammer eines Klebebinders. Die Drehachse ist dabei parallel zu einer Förderebene der Zuführstrecke und rechtwinklig zur Transportrichtung ausgerichtet.

In vorteilhafter Weise ist ein jeweiliger Greifer auf einem Linearführungsschlitten gelagert und in bzw. entgegen der Transportrichtung verschieblich durch Verschieben der Linearführungsschlitten entlang einer jeweils zugeordneten Linearführung, insbesondere während dem Schwenken eines jeweiligen Buchblocks.

In vorteilhafter Weise wird so ein kompakt bauender Anleger geschaffen, welcher ohne aufwändige Handhabungsvorgänge, d.h. ohne Umgreifen und sich daraus ergebende zusätzliche Handhabungsschritte, einen jeweiligen Buchblock automatisch direkt in die Übergabeposition des Klebebinders zuführen kann. Die Verwendung einer Zuführstrecke, wie sie allgemein bekannt ist, und von wie vorstehend beschriebenen Greifern zum Schwenken eines jeweiligen Buchblocks erlaubt eine kostengünstige und robuste Konstruktion des Anlegers.

In vorteilhafter Weiterbildung des erfindungsgemäßen Anlegers ist einem jeweiligen Greifer ein Antrieb zum Öffnen bzw. Schließen des Greifers zugeordnet, wobei der Antrieb zusätzlich beim Öffnen des Greifers auch ein Verschwenken des Greifers um eine im Wesentlichen parallel zur Transportrichtung ausgerichtete Schwenkachse des Greifers bewirkt, um so einen jeweiligen Buchblock freigeben und in die Ausgangslage des Greifers zurückfahren zu können. Als besonders vorteilhaft wird es erachtet, wenn der Antrieb des Greifers als Pneumatikzylinder ausgeführt ist.

In einer vorteilhaften Weiterbildung des erfindungsgemäßen Anlegers besitzt ein jeweiliger Greifer, insbesondere an seinem unteren Ende, einen Lagerblock, wobei der Lagerblock über ein Drehgelenk an dem Linearführungsschlitten gelagert ist und wobei mit einem jeweiligen Lagerblock eine Führungsrolle verbunden ist. Der Anleger besitzt zwei identische Führungskurven, wobei eine jeweilige Führungsrolle auf einer jeweiligen Führungskurve geführt wird, derart, dass eine Verschiebebewegung der Linearführungsschlitten mit den Lagerblöcken ein Abrollen einer Führungsrolle auf einer jeweiligen Führungskurve bewirkt. Durch eine entsprechende Ausgestaltung der Führungskurven kann erreicht werden, dass den Greifern eine bestimmte Bewegungskurve aufgeprägt wird.

In einer besonders vorteilhaften und daher bevorzugten Ausgestaltung sind die Greifer auf einer Bewegungskurve beweglich und beschreiben eine Bahnkurve, welche eine Überlagerung aus einer Schwenkbewegung und eine Linearbewegung ist. Eine solche Bahnkurve wird bevorzugt, da sie dem Bewegungsablauf beim Einlegen von Hand durch einen Maschinenbediener am nächsten kommt und die Buchblocks schonend in eine Buchblockklammer eines Klebebinders eingelegt werden können.

In einer besonders vorteilhaften Ausgestaltung weist ein jeweiliger Greifer zwei Klemmbacken auf, wobei zumindest eine Klemmbacke beweglich ist zum Öffnen bzw. Schließen des Greifers. Eine jeweilige Klemmbacke besitzt eine Schrägung, so dass ein jeweiliger, von den beiden Greifern gehaltener Buchblock leicht gebogen wird. Dadurch wird eine Stabilisierung des Buchblocks erreicht. Dies ist besonders bedeutsam bei der Verarbeitung von dünnen und biegsamen Produkten. Um die Verkürzung des Buchblocks aufgrund der Biegung auszugleichen, muss der Abstand zwischen beiden Greifern entsprechend reduziert werden. Als besonders vorteilhaft wird es daher erachtet, wenn ein Verstellantrieb vorgesehen ist zum Einstellen des Abstandes der beiden Greifer, der zugeordneten Führungskurven, der Linearführungsschlitten und der Linearführungen. Damit wird zum einen eine Anpassung auf das Format der zu transportierenden Buchblocks ermöglicht als auch eine Kompensation der Verkürzung eines Buchblocks beim Einsatz von Klemmbacken mit Schrägung.

In vorteilhafter Weiterbildung des erfindungsgemäßen Anlegers ist die Zuführstrecke in ihrer Höhe veränderlich gegenüber der Höhe der Greifer, insbesondere durch einen elektromotorisch betätigten Antrieb, insbesondere zur Anpassung an die Dicke eines jeweiligen Buchblocks. In anderen Worten: Während die Greifer des Anlegers eine unveränderliche Höhe besitzen, wird die Zuführstrecke in ihrer Höhe angepasst, um so sicherzustellen, dass die Buchblocks in die Greifer eingeführt werden können.

In einer vorteilhaften Ausgestaltungsvariante des erfindungsgemäßen Anlegers ist im Bereich der Zuführstrecke eine Buchblockdickenmesseinrichtung vorgesehen. Wenn diese Buchblockdickenmesseinrichtung als auch der Antrieb zur Höhenveränderung der Zuführstrecke mit einer gemeinsamen Steuereinheit verbunden sind, wird eine automatische Anpassung der Höhe der Zuführstrecke ermöglicht. Auch kann im Bereich der Zuführstrecke eine Buchblocksperre angeordnet sein, um einen auf der Zuführstrecke transportierten Buchblock zurückhalten zu können. Dadurch kann sichergestellt werden, dass ein Buchblock nur dann auf der Zuführstrecke bis ans Ende der Zuführstrecke weitertransportiert wird, wenn der Buchblock dort von den Frontanschlägen abgebremst werden kann. Während sich die Frontanschläge beispielsweise noch in einem abgesenkten Zustand befinden, um einen vorhergehenden Buchblock passieren zu lassen, bleibt die Buchblocksperre aktiviert.

Die Erfindung betrifft auch einen Klebebinder zur Herstellung von Büchern und klebegebundenen Buchblocks mit zumindest einem wie obenstehend beschriebenen Anleger. Der Anleger kann dabei an der Stelle der Handanlage am Klebebinder positioniert werden. Alternativ ist eine Positionierung an der Stelle der Buchblockausfuhr möglich, sodass ein zu bearbeitender Buchblock eingeführt wird, sobald ein fertiger Buchblock den Klebebinder verlassen hat. Dadurch bleibt die Handanlage frei zugänglich.

Zur einfacheren und schnelleren Positionierung kann der Anleger auf Rollen gelagert sein.

Die beschriebene Erfindung und die beschriebenen vorteilhaften Weiterbildungen der Erfindung stellen auch in beliebiger Kombination miteinander vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung:
- Fig. 1: den erfindungsgemäßen Anleger in einer ersten Momentaufnahme
- Fig. 2: den erfindungsgemäßen Anleger in einer zweiten Momentaufnahme
- Fig. 3: den erfindungsgemäßen Anleger in einer dritten Momentaufnahme
- Fig. 4a,b: detaillierte Darstelllungen alternativer Greiferausgestaltungen

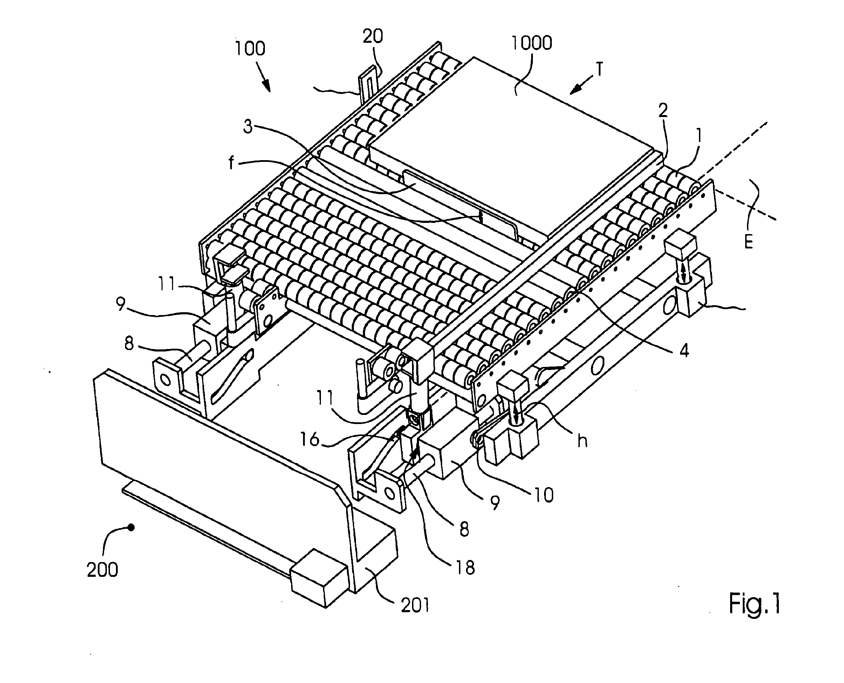

Die Figuren 1 bis 3 zeigen einen erfindungsgemäßen Anleger 100 wie er Verwendung findet, um Buchblocks 1000 einem Klebebinder 200 zuzuführen. Ein jeweiliger Buchblock 1000 wird dabei auf einem Staurollenförderer mit Zuführstrecke 1 in einer Transportrichtung T in einer im Wesentlichen horizontalen Transportebene E transportiert, von zwei Produktgreifern 11 erfasst und durch eine Verschwenkbewegung der Produktgreifer 11 von seiner horizontalen Lage in eine vertikale Lage verbracht und in eine Buchblockklammer 201 eines Klebebinders 200 eingeführt. Ein jeweiliger Buchblock wird dabei seitlich von den Greifern 11 gefasst, d.h. im Kopf- und Fußbereich des Buchblocks 1000.

Der Staurollenförderer 1, welcher eine Zuführstrecke bildet, besitzt eine Vielzahl von parallel zueinander angeordneten Staurollen. Durch diese kann ein jeweiliger Buchblock 1000 einfach transportiert werden. In der Transportebene E ist eine absenkbare Buchblocksperre 3 vorgesehen. Durch diese Buchblocksperre 3 kann ein jeweiliger Buchblock 1000 zurückgehalten werden und kann der Zeitpunkt bestimmt werden, zu welchem der Buchblock 1000 bis ans Ende der Zuführstrecke 1 transportiert wird. Die Buchblocksperre 3 ist absenkbar f ausgestaltet und verschwindet in ihrer Freigabeposition durch eine Freigabebewegung f unterhalb der Transportebene E. Die Buchblocksperre kann insbesondere pneumatisch betätigt sein. In Transportrichtung T betrachtet unmittelbar nachfolgend zur Buchblocksperre 3 sind Vollrollen 4 angeordnet, welche mit einer griffigen Oberfläche versehen sind. Da sich diese Vollrollen etwas schneller drehen als die Staurollen des Staurollenförderers 1, wird ein von der Buchblocksperre 3 freigegebener Buchblock 1000 schneller abtransportiert als ein nachfolgender Buchblock 1000 (nicht dargestellt) ankommt. Der so gebildete Abstand zwischen den Buchblöcken 1000 wird zum Schließen der Buchblocksperre 3 genutzt. Die Ausrichtung eines Buchblocks 1000 erfolgt durch ein sich in Transportrichtung T erstreckendes Ausrichtlineal 2. Ebenfalls im Bereich der Zuführstrecke des Staurollenförderers 1 befindet sich ein Dickensensor 20, welcher der Erfassung der Dicke eines jeweiligen Buchblocks 1000 dient. Der Dickensensor 20 ist mit einer nicht dargestellten Maschinensteuerung verbunden. Ebenfalls mit dieser Maschinensteuerung verbunden ist ein Antrieb zur Höhenverstellung h des Staurollenförderers 1. Darüber ist eine Anpassung der Höhe des Staurollenförderers 1 relativ zu den Produktgreifern 11 möglich, derart, dass die Höhe an die Dicke eines jeweiligen Buchblocks 1000 angepasst wird und der Buchblock 1000 in korrekter Position von den Greifern 11 ergriffen werden kann. Die Höhe der Greifer 11 ist unveränderlich: In vertikaler Ausrichtung der Greifer 11 bei der Übernahme eines Buchblocks 1000 von der Zuführstrecke 1 ist die oberste Klemmbacke 13 eines jeweiligen Greifers 11 immer auf gleicher Höhe und bildet somit eine Bezugshöhe. Um ein sicheres Greifen der Greifer 11 zu ermöglichen muss bei dickeren Buchblocks 1000 die Zuführstrecke 1 weiter abgesenkt werden. Wenn Buchblockdickensensor 20 und der Antrieb zur Höhenverstellung mit einer Maschinensteuerung verbunden sind zur Regelung der Höhenposition der Zuführstrecke 1, so wird es ermöglicht direkt aufeinander folgend Buchblocks 1000 unterschiedlicher Dicke zu bearbeiten ohne, dass Leertakte für Einstellarbeiten erforderlich wären.

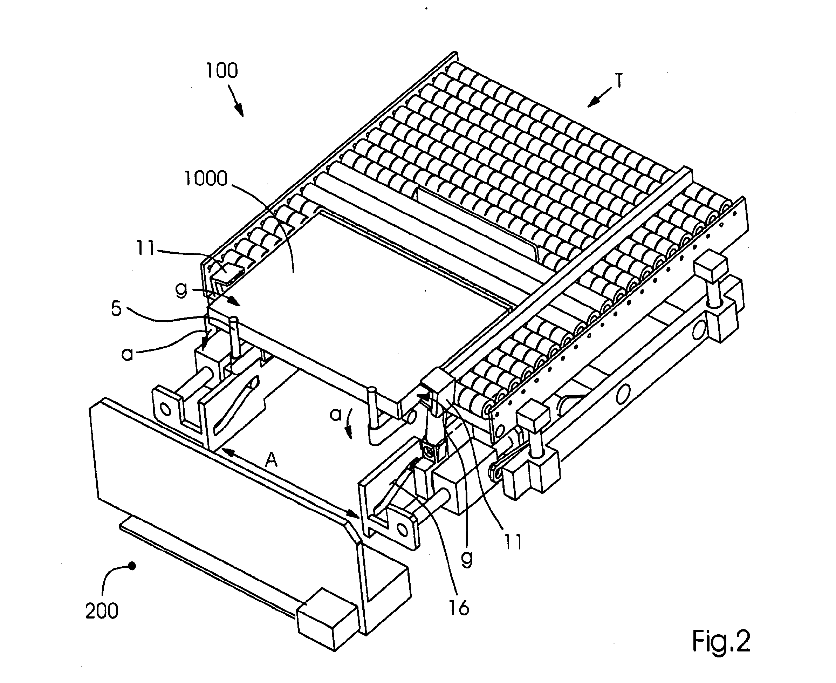

Am Ende der Zuführstrecke des Staurollenförderers 1 sind zwei Produktgreifer 11 angebracht, welche dem Erfassen eines jeweiligen Buchblocks 1000 dienen. Um einen Buchblock 1000 in seiner Übergabeposition (siehe Fig. 2) anzuhalten und eine Übernahme durch die Produktgreifer 11 in Ruhe zu ermöglichen, sind zwei Frontanschläge 5 vorgesehen. Sobald der Buchblock 1000 durch die Produktgreifer 11 gegriffen ist, führen die Frontanschläge 5 eine Absenkbewegung a aus und geben den Buchblock 1000 frei, so dass dieser von den Produktgreifern 11 weiter bewegt und in den Klebebinder 200 eingeführt werden kann. Die Frontanschläge 5 können insbesondere pneumatisch betätigt sein.

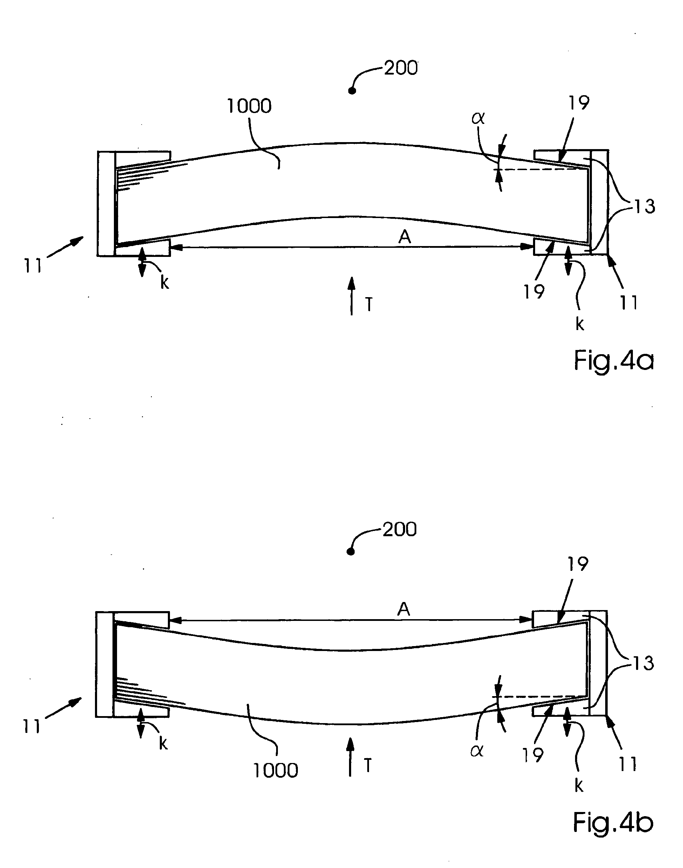

Ein jeweiliger Produktgreifer 11 besitzt zwei Klemmbacken 13 (siehe auch Figuren 4a und 4b), wobei eine der Klemmbacken 13 eine Klemmbewegung k ausführen kann, um einen Buchblock 1000 zwischen den Klemmbacken 13 einzuklemmen. Die Klemmbacken 13 des Produktgreifers 11 sind so gelagert, dass diese eine Greiferschwenkbewegung g um eine Schwenkachse 16 ausführen können, welche parallel zur Transportrichtung T ausgerichtet ist. Diese Schwenkbewegung g wird dann ausgeführt, wenn eine Klemmbacke 13 geöffnet k wird, um so einen zuvor von den Klemmbacken 13 geklemmten Buchblock 1000 frei zu geben und die Klemmbacken 13 von der Oberfläche des Buchblocks 1000 zu beabstanden. Die Greifer 11 können dann problemlos in ihre Ausgangslage zurückgeschwenkt werden, um einen nächsten Buchblock 1000 zu übernehmen.

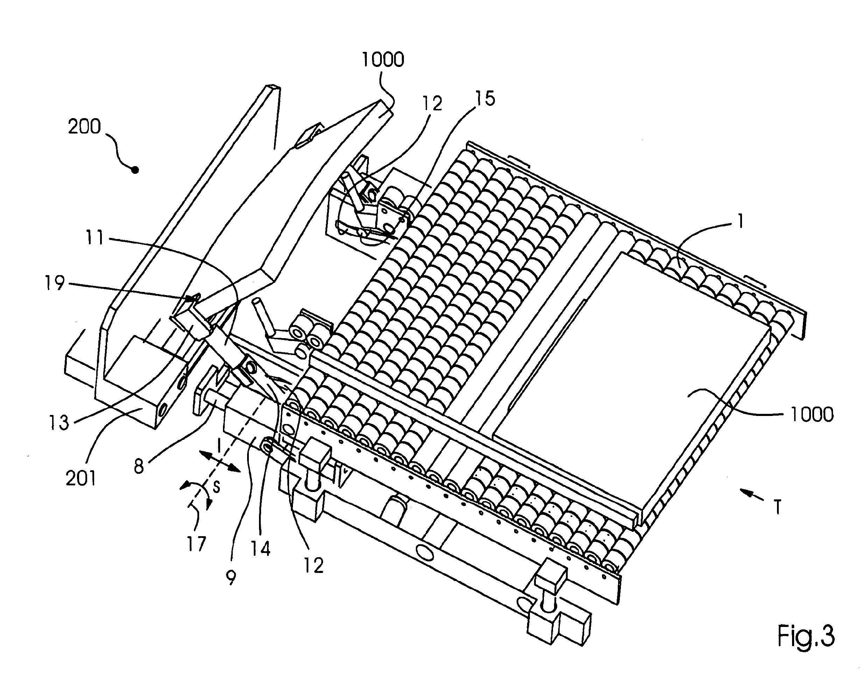

Ein jeweiliger Produktgreifer besitzt an seinem unteren Ende einen Lagerblock 14. Der Lagerblock 14 ist über ein Drehgelenk 18 drehbar an einen Linearführungsschlitten 9 gelagert. Dadurch kann ein jeweiliger Produktgreifer 11 eine Schwenkbewegung s um eine Drehachse 17 ausführen (vgl. Figur 3). Ein jeweiliger Linearführungsschlitten 9 wiederum ist auf einer zugeordneten Linearführung 8 gelagert, so dass der Linearführungsschlitten 9 auf der Linearführung 8 eine Linearbewegung 1 als Hin- und Herbewegung ausführen kann. Diese Linearbewegung 1 wird dabei durch einen Kurbeltrieb 10, welcher auf beide Linearführungsschlitten 9 wirkt, mit einem daran angeschlossenen Antrieb (nicht dargestellt) bewirkt.

Um den Produktgreifern 11 gleichzeitig eine Linearbewegung 1 und eine Schwenkbewegung s aufzuprägen, wobei sich beide Bewegungen 1 und s zu einer besonderen Bewegungsbahn überlagern, sind Führungskurven 12 vorgesehen. An jedem Lagerblock 14 ist drehbar eine Führungsrolle 15 gelagert. Die Drehachse dieser Führungsrolle 15 ist dabei beabstandet zur Drehachse 17 der Produktgreifer 11. Eine jeweilige Führungsrolle 15 wird auf einer ihr zugeordneten Führungskurve 12 geführt und bewirkt so eine Schwenkbewegung des Lagerblocks 14 und damit eine Schwenkbewegung s des Produktgreifers 11. Durch die Schwenkbewegung s der Produktgreifer 11 wird ein Buchblock 1000 von seiner horizontalen Lage (wie in Fig. 2 dargestellt) in seine vertikale Lage geschwenkt, in welcher der Buchblock 1000 an eine Buchblockklammer 201 übergeben wird. Durch die Überlagerung der Linearbewegung 1 und der Schwenkbewegung s vollführen die Produktgreifer 11 eine besondere Bewegungsbahn, welche harmonisch und kollisionsfrei ist und dem Bewegungsablauf bei der Handanlage von Buchblocks 1000 durch einen Maschinenbediener sehr nahe kommt. Die Führungskurve 12 kann dazu s-förmig ausgestaltet sein.

Eine unterhalb der Buchblockklammer 201 angebrachte horizontale Platte verhindert ein Hindurchfallen der Buchblöcke 1000 und bestimmt mit ihrer Höhenlage relativ zur Buchblockklammer 201 den sogenannten "Aushang", d.h. wie weit ein Buchblock 1000 über die Klemmen der Buchblockklammer 201 hinaussteht.

Sobald ein Buchblock 1000 in eine Buchblockklammer 201 eingeführt wurde, geben die Produktgreifer 11 den Buchblock 1000 frei, indem die Klemmbacken 13 auseinandergefahren k werden und die Klemmbacken 13 vom Buchblock 1000 weggeschwenkt g werden. Die Produktgreifer 11 können sodann wieder in ihre in Figur 1 dargestellte Ausgangslage zurückverbracht werden und einen nächsten Buchblock 1000 übernehmen.

In Figur 4a und Figur 4b sind spezielle Ausgestaltungen der Klemmbacken 13 der beiden Produktgreifer 11 dargestellt, jeweils in einer Momentaufnahme bei der Übergabe eines Buchblocks 1000 in einen Buchblockklammer. Es verfügen beide Klemmbacken 13 über eine Schrägung 19, so dass ein von den Klemmbacken 13 gehaltener Buchblock 1000 eine leichte Biegung erfährt. In den Figuren 4a und 4b ist diese Biegung zur besseren Sichtbarkeit übertrieben dargestellt. Durch diese Biegung kann der Buchblock 1000 stabilisiert bzw. versteift werden. Dank dieser Stabilisierung bzw. Versteifung können auch dünne und besonders labile Buchblocks 1000 durch den Anleger 100 bewegt und einem Klebebinder 200 zugeführt werden. Wie sich aus dem Unterschied zwischen Figur 4a und Figur 4b ergibt, kann die Schrägung 19 der Klemmbacken 13 zwei alternative Orientierungen aufweisen. Die geschrägten Flächen der Klemmbacken 13 sind in einem spitzen Winkel α zur Drehachse 17 orientiert. Da sich durch die leichte Biegung des Buchblocks 1000 gleichzeitig eine - senkrecht zur Transportrichtung T gesehen-Verkürzung des Buchblocks 1000 ergibt, muss der Abstand A zwischen den Klemmbacken 13 korrigiert und nachgeführt werden.

Um diese Abstandskorrektur vornehmen zu können und auch, um eine Anpassung des Abstands A von Greifern 11, Linearführungsschlitten 9, Linearführungen 8 und Führungskurven 12 an das Produktformat der Buchblocks 1000 zu erlauben, ist eine Einstelleinrichtung mit einem Verstellantrieb vorgesehen (nicht dargestellt). Dazu ist der Anleger 100 zweigeteilt aufgebaut. Es gibt eine erste Einheit aus Produktgreifer 11, Führungskurve 12, Linearführungsschlitten 9 und Linearführung 8, welche ortsfest im Gestell angeordnet ist. Daneben gibt es eine zweite Einheit, welche die gleichen Bauteile 8, 9, 11, 12 aufweist. Diese zweite Einheit ist verschieblich im Maschinengestell des Anlegers 100 gelagert und erlaubt daher eine Anpassung des Abstandes A.

### Bezugszeichenliste

- 1: Staurollenförderer mit Zuführstrecke
- 2: Ausrichtlineal
- 3: Buchblocksperre
- 4: Vollrollen
- 5: Frontanschlag
- 6: Rollenleiste
- 7: -
- 8: Linearführung
- 9: Linearführungsschlitten
- 10: Kurbeltrieb als Schlitten antrieb
- 11: Produktgreifer
- 12: Führungskurve
- 13: Klemmbacke
- 14: Lagerblock
- 15: Führungsrolle
- 16: Schwenkachse
- 17: Drehachse
- 18: Drehgelenk
- 19: Schrägung
- 20: Dickensensor

- 100: Anleger
- 200: Position Klebebinder
- 201: Buchblockklammer

- 1000: Buchblock

- a: Absenkbewegung
- f: Freigabebewegung
- g: Greiferschwenkbewegung
- h: Höhenverstellung
- k: Klemmbewegung Greiferbacke
- l: Linearbewegung
- s: Schwenkbewegung

- E: Ebene der Zuführstrecke
- T: Transportrichtung
- A: Abstand

- α: Winkel der Schrägung

## Patentansprüche

1. Anleger (100) für einen Klebebinder (200) mit einer im Wesentlichen horizontalen Zuführstrecke (1) zum Zuführen von Buchblocks (1000) in einer Transportrichtung (T), mindestens einem am Ende der Zuführstrecke (1) angebrachten Frontanschlag (5) zum Abbremsen eines jeweiligen Buchblocks (1000) und zwei am Ende der Zuführstrecke (1) positionierten Greifern (11) zum Ergreifen eines jeweiligen Buchblocks (1000),
**dadurch gekennzeichnet,**
**dass** die Greifer (11) eine Drehachse (17) und einen Drehantrieb (10, 9, 14) aufweisen zum Schwenken (s) eines jeweiligen Buchblocks (1000) von seiner im Wesentlichen horizontalen Lage auf der Zuführstrecke (1) in eine im Wesentlichen vertikale Lage zur Übergabe in eine Buchblockklammer (201) eines Klebebinders (200), wobei die Drehachse (17) parallel zu einer Förderebene (E) der Zuführstrecke (1) und rechtwinklig zur Transportrichtung (T) ausgerichtet ist, und
**dass** ein jeweiliger Greifer (11) auf einem Linearführungsschlitten (9) gelagert und
in bzw. entgegen der Transportrichtung (T) verschieblich ist durch Verschieben (1) der Linearführungsschlitten (9) entlang einer jeweils zugeordneten Linearführung (8).

2. Anleger nach Anspruch 1,
**dadurch gekennzeichnet,**
**dass** einem jeweiligen Greifer (11) ein Antrieb zum Öffnen bzw. Schließen (k) des Greifers zugeordnet ist, wobei der Antrieb beim Öffnen des Greifers (11) ein Verschwenken (g) des Greifers (11) um eine im Wesentlichen parallel zur Transportrichtung (T) ausgerichtete Schwenkachse (16) des Greifers (11) bewirkt und der Antrieb insbesondere als Pneumatikzylinder ausgeführt ist.

3. Anleger nach Anspruch 2,
**dadurch gekennzeichnet,**
**dass** ein jeweiliger Greifer (11) einen Lagerblock (14) besitzt, wobei der Lagerblock (14) über ein Drehgelenk (18) an dem Linearführungsschlitten (9) gelagert und wobei mit einem jeweiligen Lagerblock (14) eine Führungsrolle (15) verbunden ist,
**dass** der Anleger (100) zwei identische Führungskurven (12) besitzt, wobei eine jeweilige Führungsrolle (15) auf einer jeweiligen Führungskurve (12) geführt wird,
derart, dass eine Verschiebebewegung (1) der Linearführungsschlitten (9) ein Abrollen der Führungsrollen (15) auf einer jeweiligen Führungskurve (12) bewirkt.

4. Anleger nach einem der vorangehenden Ansprüche,
**dadurch gekennzeichnet,**
**dass** die Greifer (11) eine Bahnkurve beschreiben, welche eine Überlagerung aus Schwenkbewegung (s) und Linearbewegung (1) ist.

5. Anleger nach einem der vorangehenden Ansprüche,
**dadurch gekennzeichnet,**
**dass** ein jeweiliger Greifer (11) zwei Klemmbacken (13) aufweist, wobei zumindest eine Klemmbacke (13) beweglich ist zum Öffnen bzw. Schließen (k) des Greifers (11) und eine jeweilige Klemmbacke (13) eine Schrägung (19) aufweist, derart, dass ein jeweiliger, von den beiden Greifern (11) gehaltener Buchblock (1000) leicht gebogen wird.

6. Anleger nach einem der Ansprüche 2 bis 5,
**dadurch gekennzeichnet,**
**dass** ein Verstellantrieb vorgesehen ist zum Einstellen des Abstandes (A) der beiden Greifer (11), der zugeordneten Führungskurven (12), der Linearführungsschlitten (8) und der Linearführungen (9).

7. Anleger nach einem der vorangehenden Ansprüche,
**dadurch gekennzeichnet,**
**dass** die Zuführstrecke (1) in ihrer Höhe veränderlich (h) ist, insbesondere durch einen elektromotorisch betätigten Antrieb.

8. Anleger nach einem der vorangehenden Ansprüche,
**dadurch gekennzeichnet,**
**dass** im Bereich der Zuführstrecke (1) eine Buchblockdickenmesseinrichtung (20) angeordnet ist.

9. Anleger nach einem der vorangehenden Ansprüche,
**dadurch gekennzeichnet,**
**dass** im Bereich der Zuführstrecke (1) eine Buchblocksperre (3) zum Zurückhalten eines transportierten Buchblocks (1000) angeordnet ist.

10. Klebebinder (200) zur Herstellung von Büchern und klebegebundenen Buchblocks (1000) mit mindestens einem Anleger (100) nach einem der vorangehenden Ansprüche.

## Claims

1. Feeder (100) for an adhesive binding machine (200) with an essentially horizontal supply section (1) for supplying book blocks (1000) in a transport direction (T), at least one front stop (5) applied at the end of the feed section (1) for slowing down a book block (1000) and two grippers (11) positioned at the end of the supply section (1) for gripping a book block (1000), **characterised in that**
the grippers (11) have an axis of rotation (17) and a rotary drive (10, 9, 14) for swivelling (s) a book block (1000) from its essentially horizontal position on the supply section (1) into an essentially vertical position for delivering into a book block clamp (201) of an adhesive binding machine (200), in which the axis of rotation (17) runs parallel to a conveying plane (E) of the supply section (1) and at right angles to the transport direction (T) and that each gripper (11) is housed on a linear guide carriage (9) and may be displaced in or against the transport direction (T) by displacing (1) the linear guide carriage (9) along a linear guide (8) allocated to it.

2. Feeder according to claim 1,
**characterised in that**
a drive for opening or closing (k) the gripper is allocated to each gripper (11), in which when opening the gripper (11) the drive makes the gripper (11) swivel (g) around a swivelling axis (16) of the gripper (11) running essentially parallel to the transport direction (T) and the drive is made as a pneumatic cylinder in particular.

3. Feeder according to claim 2,
**characterised in**
**that**
each gripper (11) has a bearing block (14), in which the bearing block (14) is housed on the linear guide carriage (9) through a swivel joint (18) and in which a guide roller (15) is connected to each bearing block (14),
the feeder (100) has two identical guide curves (12), in which each guide roller (15) is guided on a guide curve (12) in such a way that a displacement movement (1) of the linear guide carriage (9) makes the guide roller (15) roll over the guide curve (12).

4. Feeder according to one of the previous
claims, **characterised in that**
the grippers (11) describe a trajectory, which is an interaction of swivelling movement (s) and linear movement (1).

5. Feeder according to one of the previous claims,
**characterised in that**
each gripper (11) has two grippping jaws (13), in which at least one gripping jaw (13) may be moved for opening or closing (k) the gripper (11) and each gripping jaw (13) has a slope (19) in such a way that each book block (1000), which is held by both grippers (11), is slightly bent.

6. Feeder according to one of claims 2 to 5, **characterised in**
**that**
an adjustment drive is provided for adjusting the distance (A) of both grippers (11), the guide curves (12) allocated, the linear guide carriages (8) and the linear guides (9).

7. Feeder according to one of the previous
claims, **characterised in that**
the supply section (1) may have its height adjusted (h), particularly through a drive operated by an electric motor.

8. Feeder according to one of the previous
claims, **characterised in that**
a device for measuring book block thickness (20) is arranged in the area of the supply section (1).

9. Feeder according to one of the previous
claims, **characterised in that**
a book block lock (3) for holding back a book block (1000) being transported is arranged in the area of the supply section (1).

10. Adhesive binding machine (200) for producing books and adhesive bound book blocks (1000) with at least one feeder (100) according to one of the previous claims.

## Revendications

1. Margeur (100) destiné à une relieuse-encolleuse (200) munie d'un trajet d'amenée (1) pour l'essentiel horizontal, affecté à l'amenée de corps d'ouvrages (1000) dans une direction de transport (T) ; d'au moins une butée frontale (5), placée à l'extrémité du trajet d'amenée (1) et affectée au freinage d'un corps d'ouvrage (1000) considéré ; et de deux organes de préhension (11), implantés à l'extrémité dudit trajet d'amenée (1) et affectés à la saisie d'un corps d'ouvrage (1000) considéré,
**caractérisé par le fait**
**que** les organes de préhension (11) comprennent un axe de rotation (17) et un entraînement en rotation (10, 9, 14), en vue du pivotement (s) d'un corps d'ouvrage (1000) considéré, depuis sa position pour l'essentiel horizontale, sur le trajet d'amenée (1), jusqu'à une position pour l'essentiel verticale en vue du transfert à un bloc (201) de serrage de corps d'ouvrages d'une relieuse-encolleuse (200), ledit axe de rotation (17) étant orienté parallèlement à un plan de convoyage (E) dudit trajet d'amenée (1) et perpendiculairement à la direction de transport (T) ; et par le fait qu'un organe de préhension (11) considéré est monté sur un chariot (9) de guidage linéaire et peut respectivement coulisser dans ladite direction de transport (T), ou en sens inverse de cette dernière, par coulissement (1) dudit chariot (9) de guidage linéaire le long d'un guide linéaire (8) respectivement associé.

2. Margeur selon la revendication 1,
**caractérisé par le fait**
**qu'**un entraînement est associé à un organe de préhension (11) considéré, pour provoquer respectivement l'ouverture ou la fermeture (k) dudit organe de préhension, ledit entraînement provoquant, lors de l'ouverture dudit organe de préhension (11), un pivotement (g) dudit organe de préhension (11) autour d'un axe (16) de pivotement dudit organe de préhension (11) qui est orienté, pour l'essentiel, parallèlement à la direction de transport (T) ; et ledit entraînement étant notamment réalisé sous la forme d'un vérin pneumatique.

3. Margeur selon la revendication 2,
**caractérisé par le fait**
**qu'**un organe de préhension (11) considéré est pourvu d'un bloc (14) formant palier, ledit bloc (14) formant palier étant monté sur le chariot (9) de guidage linéaire par l'intermédiaire d'une articulation tournante (18), et un rouleau de guidage (15) étant relié à un bloc considéré (14) formant palier ; et par le fait que ledit margeur (100) est doté de deux cames de guidage (12) identiques, un rouleau de guidage (15) considéré étant guidé sur une came de guidage (12) respective, de telle sorte qu'un mouvement de coulissement (1) des chariots (9) de guidage linéaire provoque un roulement des rouleaux de guidage (15) sur une came de guidage (12) respective.

4. Margeur selon l'une des revendications précédentes,
**caractérisé par le fait**
**que** les organes de préhension (11) décrivent une trajectoire qui est une superposition d'un mouvement de pivotement (s) et d'un mouvement linéaire (1).

5. Margeur selon l'une des revendications précédentes,
**caractérisé par le fait**
**qu'**un organe de préhension (11) considéré est pourvu de deux mâchoires de coincement (13), sachant qu'au moins une mâchoire de coincement (13) est douée de mobilité en vue, respectivement, de l'ouverture ou de la fermeture (k) dudit organe de préhension (11), et qu'une mâchoire de coincement (13) considérée est munie d'un biseau (19) de façon telle qu'un corps d'ouvrage (1000) considéré, retenu par les deux organes de préhension (11), soit légèrement cintré.

6. Margeur selon l'une des revendications 2 à 5,
**caractérisé par le fait**
**qu'**un entraînement de réglage est prévu pour régler l'espacement (A) des deux organes de préhension (11), des cames de guidage (12) associées, des chariots (9) de guidage linéaire et des guides linéaires (8).

7. Margeur selon l'une des revendications précédentes,
**caractérisé par le fait**
**que** la hauteur (h) du trajet d'amenée (1) peut être modifiée, en particulier par l'intermédiaire d'un entraînement à actionnement électromotorisé.

8. Margeur selon l'une des revendications précédentes,
**caractérisé par le fait**
**qu'**un dispositif (20) de mesure d'épaisseurs de corps d'ouvrages est installé dans la région du trajet d'amenée (1).

9. Margeur selon l'une des revendications précédentes,
**caractérisé par le fait**
**qu'**un verrou (3) de corps d'ouvrages est disposé dans la région du trajet d'amenée (1), en vue de retenir un corps d'ouvrage (1000) transporté.

10. Relieuse-encolleuse (200) dévolue à la production de livres et de corps d'ouvrages (1000) à reliures encollées, équipée d'au moins un margeur (100) conforme à l'une des revendications précédentes.
